Europäisches Patentamt

(19) European Patent Office

Office européen des brevets

(11) Publication number: **0 082 652**
**B1**

(12) **EUROPEAN PATENT SPECIFICATION**

(45) Date of publication of patent specification: **19.08.87**

(21) Application number: **82306619.6**

(22) Date of filing: **10.12.82**

(51) Int. Cl.⁴: **H 04 N 9/04,** G 11 C 27/02

(54) **Videosignal mixing circuit.**

(30) Priority: **11.12.81 JP 199858/81**

(43) Date of publication of application:
**29.06.83 Bulletin 83/26**

(45) Publication of the grant of the patent:
**19.08.87 Bulletin 87/34**

(84) Designated Contracting States:
**AT DE FR GB NL**

(56) References cited:
**GB-A-2 066 616**
**US-A-4 205 336**

**ELECTRONIC DESIGN, vol. 26, no. 23,**
**November 1978, pages 84-89, Rochelle Park,**
**US; "Designing with a sample-hold won't be a**
**problem if you use the right circuit"**

(73) Proprietor: **SONY CORPORATION**
**7-35 Kitashinagawa 6-Chome Shinagawa-ku**
**Tokyo 141 (JP)**

(72) Inventor: **Onga, Matoto**
**2-1-32, Taiheidai Tsujido**
**Fujisawa-shi Kanagawa-ken (JP)**
Inventor: **Sase, Masatoshi**
**4-13-1, Asahi-cho**
**Atsugi-shi Kanagawa-ken (JP)**
Inventor: **Yamanaka, Seisuke**
**c/o Sony Corporation, P.O. Box 10**
**Tokyo A.P. Tokyo 149 (JP)**

(74) Representative: **Ayers, Martyn Lewis Stanley**
**et al**
**J.A. KEMP & CO. 14 South Square Gray's Inn**
**London, WC1R 5EU (GB)**

Courier Press, Leamington Spa, England.

## Description

This invention relates to a mixing circuit for mixing sampled video signals and, more particularly, to a mixing circuit for mixing together a plurality of sampled outputs which differ in phase by $2\pi/N$ from one another.

An image sensor consisting of a solid-state image sensor element such as a charge coupled device (CCD) generally has a scattered picture element structure. In such image sensor, sensor outputs corresponding to individual picture elements are subjected to a sampling treatment before various signal processings are carried out. For example, where a luminance signal is formed from a color image output obtained from a solid-state color image sensor provided with a color coding filter, color signals obtained as a result of color separation of the color image signal are converted through a 1H delay circuit into simultaneous signals, which are additively synthesized in predetermined proportions to obtain the luminance signal.

In the case of a color television signal of the NTSC (National Television System Committee) system, the luminance signal Y is defined by an equation

$$Y=0.11\ B+0.59\ G+0.30\ R \qquad (1)$$

That is, the luminance signal Y can be obtained by additively synthesizing blue, green and red signals B, G and R in the proportions 0.11:0.59:0.30. Where the luminance signal Y is formed from a color image output of a solid-state image sensor of a scattered picture element structure, the turn-round distortion of side bands due to sampling is removed by forming a low frequency luminance component $Y_L$ given by

$$Y_L=0.11\ B+0.59\ G+0.30\ R \qquad (2)$$

and a high frequency luminance component $Y_H$ given by

$$Y_H=0.5\ B+G+0.5\ R \qquad (3)$$

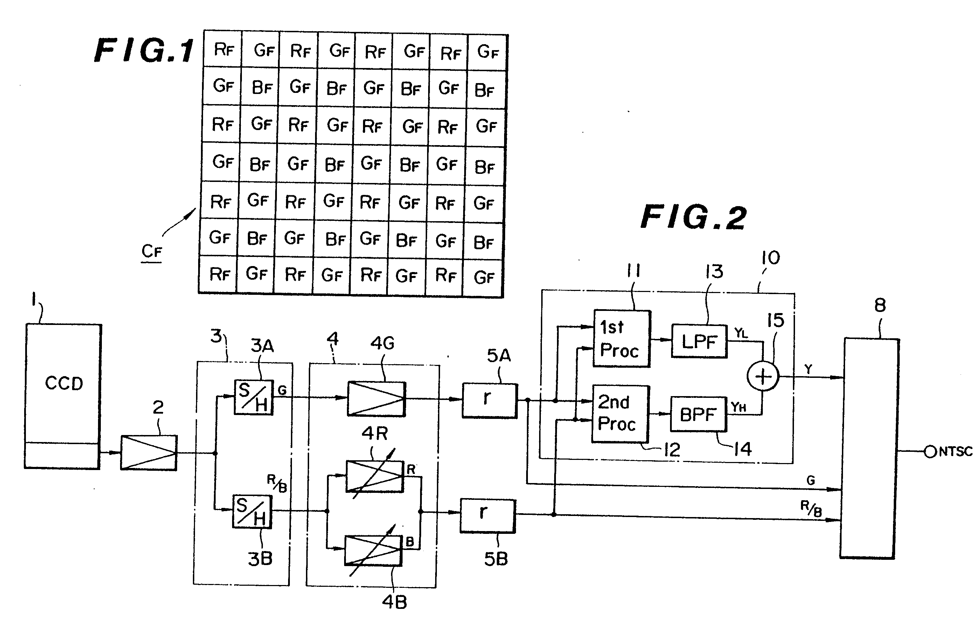

and combining these components $Y_L$ and $Y_H$ to obtain the luminance signal Y. For example, with a one-chip solid-state color image sensor, which uses a mosaic color coding filter $C_F$ as shown in Fig. 1 of the accompanying drawings in which green filters $G_F$ are arranged in a checkerboard-like fashion and red and blue filters $R_F$ and $B_F$ are arranged in alternate horizontal lines between adjacent green filters $G_F$, an NTSC television signal is formed with a signal processing circuit having a construction as shown in Fig. 2.

In Fig. 2, designated at 1 is a solid-state color image sensor. The image sensor 1 is formed as an interline transfer type CCD provided with the color coding filter $C_F$ as described above. The image sensor 1 provides a color image output at a clock frequency of $2f_c$. The color image output of the image sensor 1 is coupled through a buffer amplifier 2 to a color separating circuit 3. The color separating circuit 3 consists of two sample/hold circuits 3A and 3B. The sample/hold circuits 3A and 3B are operated under the control of respective sampling clocks which have a frequency $f_c$ and are 180° (i.e. $\pi$) out of phase with each other. The sample/hold circuit 3A samples and holds the green signal G in the color image output. The other sample/hold circuit 3B samples and holds a red/blue signal R/B. Designated at 4 is a white balance control circuit, which includes a fixed gain amplifier 4G for amplifying the G signal, a variable gain amplifier 4R for amplifying the R signal and a variable gain amplifier 4B for amplifying the B signal. The white balance control is done by controlling the gains of the variable gain amplifiers 4R and 4B such that the R, G and B signals are at an equal level. Designated at 10 is a luminance signal forming circuit. The G and R/B signals, having been level adjusted in the white balance control circuit 4, are coupled through respective gamma correction circuits 5A and 5B to the luminance signal forming circuit 10. The luminance signal forming circuit 10 includes a first signal processing circuit 11 for effecting additive synthesis of the equation (2), a second signal processing circuit 12 for effecting additive synthesis of the equation (3) a low-pass filter 13 for receiving the synthesized output signal of the first signal processing circuit 11, a band-pass filter 14 for receiving the synthesized output signal of the second signal processing circuit 12, and a signal adder 15 for effecting additive synthesis of a low frequency luminance signal $Y_L$ obtained from the low-pass filter 13 and a high frequency luminance signal $Y_H$ obtained from the band-pass filter 14. The circuit 10 outputs a luminance signal Y:

$$Y=Y_L+Y_H.$$

The three primary color signals R, G and B having been gamma corrected in the gamma correction circuits 5A and 5B and the luminance signal Y formed by the luminance signal synthesizing circuit 10 are supplied to a color coder 8. The color coder 8 forms a composite video signal according to the NTSC system.

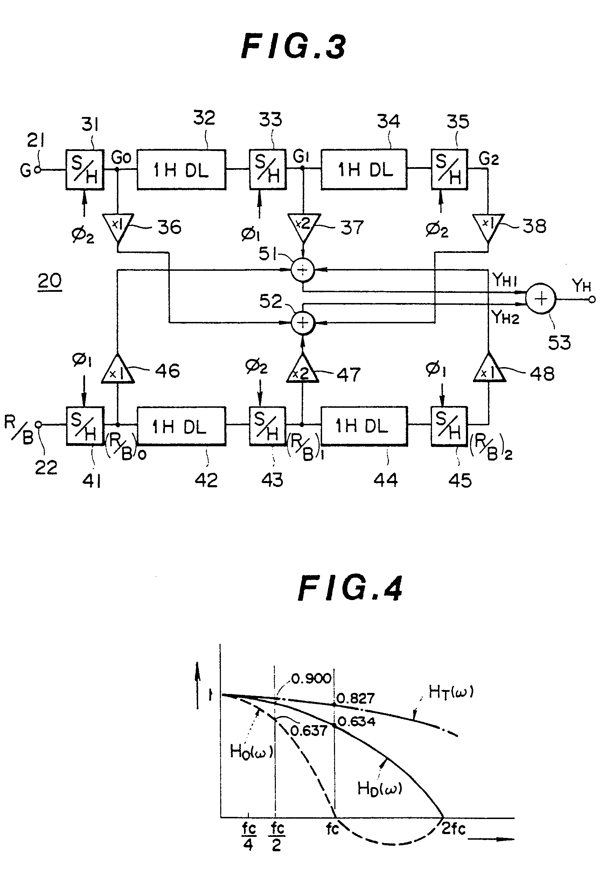

In the luminance signal forming circuit 10 described above, the second signal processing circuit 12 for forming the high frequency luminance signal $Y_H$, has a construction as shown in Fig. 3. In the signal processing circuit 20 shown in Fig. 3, the G and R/B signals obtained through color separation of the color image signal from the solid-state color image sensor 1 are converted to simultaneous signals through four 1H delay circuits 32, 34, 42 and 44 providing a delay time equal to one horizontal scanning period 1H. These simultaneous signals are weightedly added in first and second signal adders 51 and 52 to produce respective addition output signals $Y_{H1}$ and $Y_{H2}$. The addition output signals $Y_{H1}$ and $Y_{H2}$ are purely added together in a third signal adder 53 to form the high frequency luminance signal

$Y_H$. The G signal is supplied to a first signal input terminal 21. The first signal input terminal 21 is connected through a first sample/hold circuit 31 to a first 1H delay circuit 32. The first 1H delay circuit 32 is connected through a second sample/hold circuit 33 to a second 1H delay circuit 34. The second 1H delay circuit 34 is connected to a third sample/hold circuit 35. The R/B signal is supplied to a second input signal terminal 22. Like the line for the G signal described above, the second signal input terminal 22 is connected through a sample/hold circuit 41, a 1H delay circuit 42, a sample/hold circuit 43 a 1H delay circuit 44 and a sample/hold circuit 45. The output signals $(R/B)_0$ and $(R/B)_2$ from the respective first and third sample/hold circuits 41 and 45 in the R/B signal line and the output signal $G_1$ from the second sample/hold circuit 33 in the G signal line are coupled through respective weighting circuits 46, 48 and 37 for being weighted such that they are in proportions of

$$1 \cdot (R/B)_0 : 1 \cdot (R/B)_2 : 2 \cdot G_1.$$

The signals weighted in these proportions are fed to a first signal adder 51. The output signals $G_0$ and $G_2$ from the first and third sample/hold circuits 31 and 35 in the G signal line and the output $(R/B)_2$ from the second sample/hold circuit 43 in the R/B signal line are weighted in respective weighting circuits 36, 38 and 47 in proportions of

$$1 \cdot G_0 : 1 \cdot G_2 : 2 \cdot (R/B)_1.$$

These weight signals are fed to a second adder 52.

The sampling and holding operation of the first and third sample/hold circuits 41 and 45 in the R/B signal line and the second sample/hold circuit 33 in the G signal line are done under the control of a clock signal $\phi_1$. The sampling and holding operation of the second sample/hold circuit 43 of the R/B signal line and the first and third sample/hold circuits 31 and 35 in the G signal line are done under the control of a second clock signal $\phi_2$ 180 degrees out of phase with the first clock signal 2.

Since in the signal processing circuit 20 of the above construction the sample/hold circuits 31, 33 and 35 and sample/hold circuits 41, 43 and 45 are controlled for zero hold by the respective clock signals $\phi_1$ and $\phi_2$ which are 180 degrees out of phase with each other, a transfer function $H_0(\omega)$ having a low-pass filter effect expressed by an equation

$$H_0(\omega) = \frac{\sin\left(\dfrac{\omega Tc}{2}\right)}{\dfrac{\omega Tc}{2}} \qquad (4)$$

where $f_c$ is the clock frequency and $T_C$ is the period, is supplied to the first and second signal adders 51 and 52. The transfer function $H_0(\omega)$ has a frequency characteristic as shown by the dashed curve in Figure 4. This filtering characteristic of a zero order hold circuit is known from Electronic Design Vol. 26, No. 23 November 1978 pages 86—87.

Where the luminance signal Y is to be obtained from a frequency band exceeding the Nyquist limit as in an image sensor apparatus making use of a solid-state color image sensor, the value of the transfer function is $H_0(\omega)=0.900$ for $f=f_c/4$ but it is reduced to $H_0(\omega)=0.637$ for $f=f_c/2$. For this reason, if the signals $Y_{H1}$ and $Y_{H2}$ are purely added together in the third signal adder 53 as noted above, deterioration of the high frequency characteristics of the luminance signal Y leads to reduction of the horizontal resolution, which is a very serious problem.

A solid state colour television camera circuit corresponding to the precharacterizing part of claim 1 is disclosed in GB 2066616, which shows three parallel sample and hold circuits for the red, green and blue signals from the camera which deliver their outputs via respective amplifiers to a matrix circuit where they are used to derive luminance and colour difference signals. The present invention seeks to provide an improved video signal mixing circuit which both facilitates the mixing process while reducing undesirable frequency-dependent effects.

The present invention provides a video signal mixing circuit for mixing N input video signals, N being an integer greater than 1, comprising;

N input terminals to be respectively supplied with said input video signals,

a mixing circuit connected to all of said input terminals for deriving a mixed video output signal, and

a buffer amplifier connected to said mixing circuit for deriving output signal, characterized in that

said mixing circuit includes a sampling circuit for sampling and supplying said N input signals to said buffer amplifier in sequence, the samples derived from the respective input video signals being out of phase with one another by $2\pi/N$, and holding means connected to a junction point of said sampling circuit and said buffer amplifier.

Other, optional features of the invention are defined in the sub claims.

The invention will be further described with reference to the accompanying drawings, in which:

Figure 1 is a schematic plan view showing a mosaic color coding filter provided in a solid-state image sensor;

Figure 2 is a block diagram showing a signal processing circuit in a usual solid-state color image sensor apparatus;

Figure 3 is a block diagram showing a specific construction of a signal processing circuit for forming a high frequency luminance signal in the signal processing circuit;

Figure 4 is a graph showing frequency characteristics of a transfer function given to the high frequency luminance signal;

Figure 5 is a block diagram showing the basic construction of a mixing circuit according to the present invention;

Figure 6 is a time chart for explaining the operating principles underlying the mixing circuit of Figure 5;

Fig. 7 is a circuit diagram showing a specific circuit construction of the mixing circuit;

Fig. 8 is a circuit diagram showing a different embodiment of the present invention applied to the case of mixing three sampled signals; and

Fig. 9 is a time chart for explaining the operation of the embodiment of Fig. 8.

Now, a preferred embodiment of the present invention will be described with reference to the drawings.

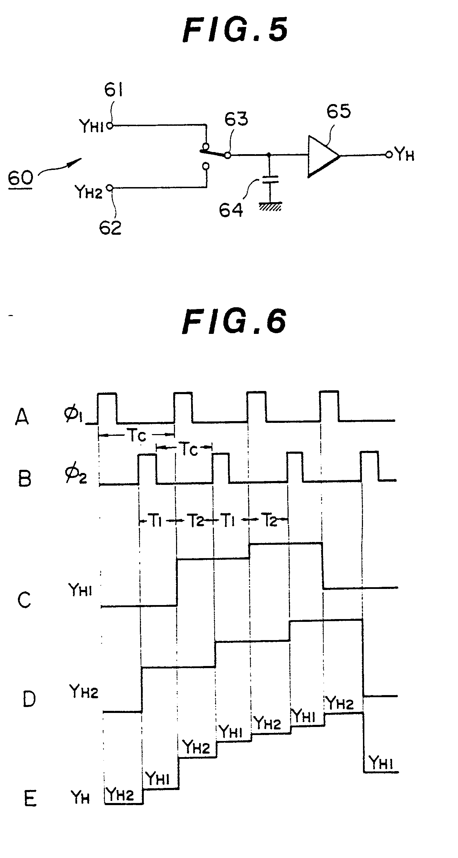

Fig. 5 shows the basic construction of the sampled signal mixing circuit 60 according to the present invention. Here, sampled output signals $Y_{H1}$ and $Y_{H2}$ which are 180 degrees out of phase with each other are switched through an analog switch 63 to be supplied to a common holding capacitor 64 for mixing. The operational principles of the circuit of Fig. 5 will now be described in connection with the case where the circuit is used as the third signal adder 53 in the signal processing circuit 20 in the luminance signal forming circuit 10 (Fig. 2) described above in Fig. 3.

In the circuit of Fig. 5, the output signals $Y_{H1}$ and $Y_{H2}$ from the first and second signal adders 51 and 52 in the signal processing circuit 20 are supplied to the first and second signal input terminals 61 and 62. These output signals $Y_{H1}$ and $Y_{H2}$ are switched through the analog switch 63 such that they are selectively supplied in respective periods $T_1$ and $T_2$ which together constitute the sampling period $T_c$ to the holding capacitor 64. Since the signals $Y_{H1}$ and $Y_{H2}$ have been sampled and held under the control of the clock signals $\phi_1$ and $\phi_2$ which are 180 degrees out of phase with each other as shown in A and B in Fig. 6, they have waveforms as shown in C and D in Fig. 6. With the periods $T_1$ and $T_2$ set to be

$$T_1 = T_2 = T_c/2$$

and with the signals $Y_{H1}$ and $Y_{H2}$ switched through the analog switch 63 such that the signal $Y_{H1}$ having been sampled under the control of the clock signal $\phi_1$ is supplied to the holding capacitor 64 for the period $T_1$ synchronized to the other clock signal $\phi_2$ and that the other signal $Y_{H2}$ having been sampled under the control of the other clock signal $\phi_2$ is supplied to the holding capacitor 64 for the period $T_2$ synchronized to the clock signal $\phi_1$, a luminance signal $Y_H$ corresponding to the successive $Y_{H1}$ and $Y_{H2}$ sample values as shown in E in Fig. 6 can be obtained. In Fig. 5, designated at 65 is an output buffer amplifier. With the construction shown in Fig. 5, it is possible to obtain a mixing operation, which is substantially equivalent to the zero hold effected at clock frequency of $2f_c$ and with a period of $T_c/2$. Thus, the transfer function $H_D(\omega)$, which has a low-pass filter effect, given to the resultant luminance signal $Y_H$ can be expressed as

$$H_D(\omega) = \frac{\sin\left(\dfrac{\omega Tc}{4}\right)}{\dfrac{\omega Tc}{4}} \qquad (5)$$

The frequency characteristic of this transfer function $H_D(\omega)$ is shown by the solid curve in Fig. 4. While in the case of the prior art mixing operation the level is reduced to $H_D(\omega) = 0.637$ for $f = f_c/2$, as shown in Fig. 4, with the signal mixing circuit according to the invention the level obtainable for the same frequency $f = f_c/2$ is $H_D(\omega) = 0.900$. In other words, it is possible to greatly improve the high frequency characteristic of the luminance signal Y.

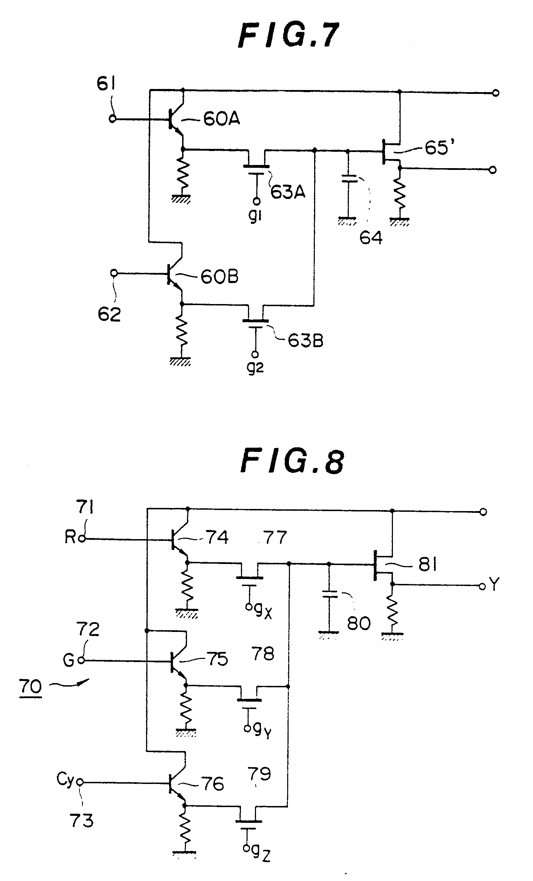

Fig. 7 shows a specific circuit construction of the signal mixing circuit 60. As is shown, the circuit 60 includes input buffer transistors 60A and 60B, an output buffer transistor 65' and switching transistors 63A and 63B constituting the analog switch 63. The mixing operation as described above is effected in the holding capacitor 64 under the control of gate signals $g_1$ and $g_2$, which have respective pulse widths $T_1$ and $T_2$ and a repetition period $T_c$ and are supplied to the gates of the respective switching transistors 63A and 63B.

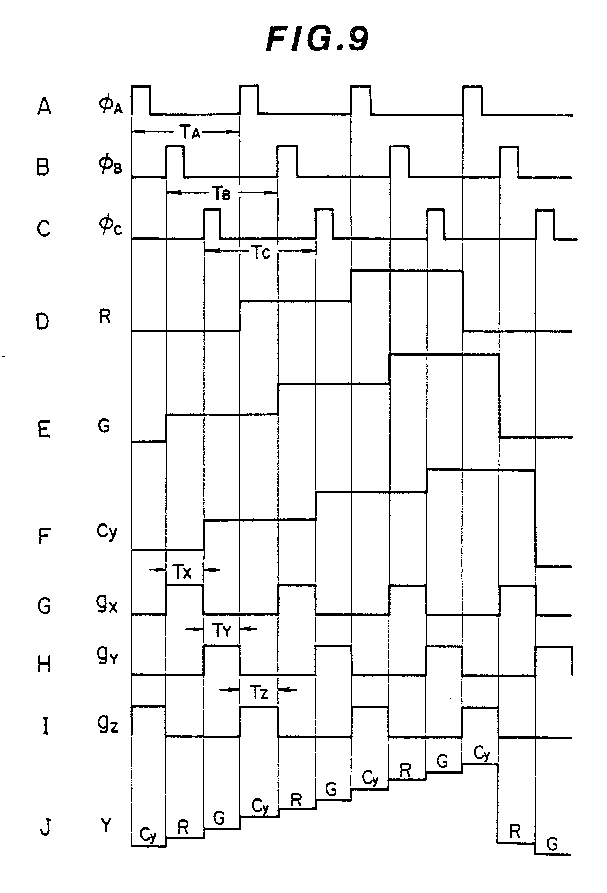

Fig. 8 shows a different embodiment of the invention. In this embodiment, signals sampled $2\pi/3$ out of phase with one another are mixed together as in the case of forming luminance signal Y by mixing together color signals R, G and $C_y$ obtained through color disassembly of a color image output of a frame transfer type CCD image sensor provided with vertical stripes color filters for red (R), green (G) and cyan ($C_y$). In this embodiment, R, G and $C_y$ signals as shown in D, E and F in Fig. 9, which are obtained by color disassembly under the control of clock signals $\phi_A$, $\phi_B$ and $\phi_C$, $2\pi/3$ out of phase with one another as shown at A, B and C in Fig. 9, are supplied to first to third signal input terminals 71, 72 and 73. The R, G and $C_y$ signals are coupled through input buffer transistors 74, 75 and 76 to switching transistors 77, 78 and 79 for analog switching to be selectively supplied to a holding capacitor 80. The first switching transistor 77 operates under the control of a gate signal $g_x$ as shown at G in Fig. 9, synchronized to the sampling clock signal $\phi_A$ for the G signal and having a pulse width $T_x$, and supplies the R signal to the holding capacitor 80 during the period $T_x$. The second switching transistor 78 operates under the control of a gate signal $g_y$ as shown at H in Fig. 9, synchronized to the sampling clock signal $\phi_B$ for the $C_y$ signal and having a pulse width $T_y$, and supplies the G signal to the holding capacitor 80 during the period $T_y$.

The third switching transistor 79 operates under the control of a gate signal $g_z$ as shown in I at Fig. 9, synchronized to the sampling clock signal $\phi_C$ for the R signal and having a pulse width $T_z$, and supplies the R signal to the holding capacitor 80 during the period $T_z$. The pulse periods $T_x$, $T_y$ and $T_z$ of the gate signals $g_x$, $g_y$ and $g_z$ are set to be equal to one-third of the period $T_C$ of the clock signals $\phi_A$, $\phi_B$ and $\phi_C$. From the holding capacitor 80, to which the R, G and $C_Y$ signals are supplied through switching by the switching transistors 77, 78 and 79, a luminance signal Y as shown in J in Fig. 9 can be obtained via an output buffer transistor 81.

The transfer function $H_T(\omega)$ given to the luminance signal Y in this embodiment can be expressed as

$$H_T(\omega)=\frac{\sin(\dfrac{\omega Tc}{6})}{\dfrac{\omega Tc}{6}} \qquad (6)$$

In this embodiment, the transfer function $H_T(\omega)$ has a frequency characteristic as shown by the dot-and-bar curve in Fig. 4. The level for $f=f_c/2$ is $H_T(\omega)=0.955$, a further improvement of the high frequency characteristic of the luminance signal Y.

In general, the present invention can be applied to the mixing of a plurality of outputs sampled $2\pi/N$ (N being an integer greater than 1, i.e., N=2, 3,...) out of phase with one another. The sampled outputs may be sequentially supplied through an N-contact analog switch circuit to a common holding capacitor for mixing.

## Claims

1. A video signal mixing circuit for mixing N input video signals, N being an integer greater than 1, comprising;
N input terminals (61, 62) to be respectively supplied with said input video signals,
a mixing circuit (63, 64) connected to all of said input terminals (61, 62) for deriving a mixed video output signal, and
a buffer amplifier (65) connected to said mixing circuit (63, 64) for deriving output signal, characterized in that
said mixing circuit (60, 70) includes a sampling circuit (63; 77, 78, 79) for sampling and supplying said N input signals to said buffer amplifier (65) in sequence, the samples derived from the respective input video signals being out of phase with one another by $2\pi/N$, and holding means (64; 80) connected to a junction point of said sampling circuit (63; 77, 78, 79) and said buffer amplifier (65).

2. A mixing circuit according to claim 1 wherein said sampling circuit includes at least two transistors (63A, 63B; 77, 78, 79) each provided between a respective one of said sampling circuits (61, 60A, 62, 60B; 71, 74, 72, 75, 73, 76) and said holding means (80), said transistors (63A, 63B; 77, 78, 79) being on-off operated in different phases with respect to one another to sequentially supply at least two input signals to said holding means.

3. A mixing circuit according to any one of claims 1 or 2 wherein said sampling circuits also serve as a switch circuit.

4. A mixing circuit according to claim 2 wherein the operation of said transistors (63A, 63B; 74, 75, 76) is controlled by control signals ($g_1$, $g_2$) related to a sampling clock.

5. A mixing circuit according to any one of the preceding claims wherein said holding means (80) is a hold capacitor (80).

6. A mixing circuit according to any one of the preceding claims wherein the transfer function $H_D(\omega)$ may be expressed as at least approximately

$$H_D(\omega)=\frac{\sin(\dfrac{\omega Tc}{2N})}{\dfrac{\omega Tc}{2N}}$$

wherein N is the number of sampled input signals and $T_C$ is the sampling period.

7. A mixing circuit according to any one of the preceding claims wherein said at least two video signals are high frequency and low frequency luminance components $Y_H$ and $Y_L$ of a video signal.

## Patentansprüche

1. Videosignal-Mischaltung zum Mischen von N Video-Eingangssignalen, (wobei N eine ganze Zahl größer als 1 ist),
mit N Eingangsanschlüssen (61, 62), denen jeweils eines der Video-Eingangssignale zuführbar ist,
mit einer mit allen Eingangsanschlüssen (61, 62) verbundenen Mischschaltung (63, 64) zur Ableitung eines gemischten Video-Ausgangssignals
sowie mit einem Pufferverstärker (65), der mit der Mischschaltung (63, 64) zur Ableitung des Ausgangssignals verbunden ist,
dadurch gekennzeichnet,
daß die Mischschaltung (60, 70) eine Abtastschaltung (63; 77, 78, 79) zum sequentiellen Abtasten der N Eingangssignale und zu deren Zuführung zu dem Pufferverstärker (65), wobei die aus den entsprechenden Video - Eingangssignalen abgeleiteten Abtastproben um $2\pi/N$ gegeneinander phasenverschoben sind, und eine Halteeinrichtung (64, 80) aufweist, die mit einem Verbindungspunkt der Abtastschaltung (63; 77, 78, 79) und des Pufferverstärkers (65) verbinden ist.

2. Mischschaltung nach Anspruch 1, bei der die Abtastschaltung wenigstens zwei Transistoren (63A, 63B; 77, 78, 79) enthält, die jeweils zwischen einer jeweils zugeordneten Abtastschaltung (61, 60A, 62, 62B; 71, 74, 72, 75, 73, 76) und der Halteeinrichtung (80) angeordnet sind, wobei diese Transistoren (63A, 63B; 77, 78, 79) mit zueinander unterschiedlichen Phasen ein- und ausgeschaltet werden, derart, daß sie der Halteeinrichtung wenigstens zwei Eingangssignale sequentiell zuführen.

3. Mischschaltung nach einem der Ansprüche 1 oder 2, bei der die Abtastschaltungen außerdem als Schalterkreise dienen.

4. Mischaltung nach Anspruch 2, bei der der Schaltzustand der Transistoren (63A, 63B; 74, 75, 76) von auf einen Abtasttakt bezogenen Steuersignalen ($g_1$, $g_2$) gesteuert wird.

5. Mischschaltung nach einem der vorhergehenden Ansprüche, bei der die Halteeinrichtung (80) von einem Haltekondensator (80) gebildet ist.

6. Mischschaltung nach einem der vorhergehenden Ansprüche, deren Übertragungsfunktion $H_D(\omega)$ zumindest annäherend durch folgende Beziehung gegeben ist:

$$H_D(\omega) = \frac{\sin\left(\dfrac{\omega Tc}{2N}\right)}{\dfrac{\omega Tc}{2N}}$$

worin N die Anzahl der abgetasteten Eingangssignale und Tc die Abtastperiode bedeuten.

7. Mischschaltung nach einem der vorhergehenden Ansprüche, bei der die wenigstens zwei Videosignale hochfrequente und niederfrequente Luminanzkomponenten $Y_H$ und $Y_L$ eines Videosignals sind.

**Revendications**

1. Circuit mélangeur de signaux vidéo destiné à mélanger N signaux vidéo d'entrée, N éant un nombre entier supérieur à l'unité; comportant:

N bornes d'entrée (61, 62) qui reçoivent respectivement lesdits signaux vidéo d'entrée,

un circuit mélangeur (63, 64) connecté à toutes lesdites bornes d'entrée (61, 62) pour dériver un signal de sortie vidéo mélangé, et

un amplificateur tampon (65) connecté audit circuit mélangeur (63, 64) pour dériver un signal de sortie, caractérisé en ce que:

ledit circuit mélangeur (60, 70) comporte un circuit d'échantillonnage (63, 77, 78, 79) destiné à échantillonner et à fournir lesdits N signaux d'entrée en séquence audit amplificateur tampon (65), les échantillons dérivés des signaux vidéo d'entrée respectifs étant déphasés les uns par rapport aux autres de $2\pi/N$ et un dispositif de maintien (64, 80) connecté à un point de jonction dudit circuit d'échantillonnage (63, 77, 78, 79) et dudit amplificateur tampon (65).

2. Circuit mélangeur selon la revendication 1, dans lequel ledit circuit d'échantillonnage comporte au moins deux transistors (63A, 63B, 77, 78, 79) prévus chacun entre l'un respectif desdits circuits d'échantillonnage (61, 60A, 62, 60B, 71, 74, 72, 75, 73, 76) et ledit dispositif d'échantillonnage (80) lesdits transistors (63A, 63B; 77, 78, 79) étant débloqués et bloqués dans des phases différentes les unes des autres pour fournir séquentiellement au moins deux signaux d'entrée audit dispositif de maintien.

3. Circuit mélangeur selon la revendication 1 ou 2, dans lequel lesdits circuits d'échantillonnage servant également de circuit de commutation.

4. Circuit mélangeur selon la revendication 2, dans lequel le fonctionnement desdits transistors (63A, 63B; 74, 75, 76) est commandé par des signaux de commande ($g_1$, $g_2$) liés à une horloge d'échantillonnage.

5. Circuit mélangeur selon l'une quelconque des revendications précédentes, dans lequel ledit dispositif de maintien (80) est un condensateur de maintien (80).

6. Circuit mélangeur selon l'une quelconque des revendications précédentes, dans lequel la fonction de transfert ($H_D(\omega)$) peut s'exprimer au moins approximativement par:

$$H_D(\omega) = \frac{\sin\left(\dfrac{\omega Tc}{2N}\right)}{\dfrac{\omega Tc}{2N}}$$

où N est le nombre des signaux d'entrée échantillonnés et $T_C$ est la période d'échantillonnage.

7. Circuit mélangeur selon l'une quelconque des revendications précédentes, dans lequel lesdits au moins deux signaux vidéo sont des composantes de luminance à haute fréquence et à basse fréquence ($Y_H$ et $Y_L$) d'un signal vidéo.

## FIG.1

| $R_F$ | $G_F$ | $R_F$ | $G_F$ | $R_F$ | $G_F$ | $R_F$ | $G_F$ |
|---|---|---|---|---|---|---|---|
| $G_F$ | $B_F$ | $G_F$ | $B_F$ | $G_F$ | $B_F$ | $G_F$ | $B_F$ |
| $R_F$ | $G_F$ | $R_F$ | $G_F$ | $R_F$ | $G_F$ | $R_F$ | $G_F$ |
| $G_F$ | $B_F$ | $G_F$ | $B_F$ | $G_F$ | $B_F$ | $G_F$ | $B_F$ |
| $R_F$ | $G_F$ | $R_F$ | $G_F$ | $R_F$ | $G_F$ | $R_F$ | $G_F$ |
| $G_F$ | $B_F$ | $G_F$ | $B_F$ | $G_F$ | $B_F$ | $G_F$ | $B_F$ |
| $R_F$ | $G_F$ | $R_F$ | $G_F$ | $R_F$ | $G_F$ | $R_F$ | $G_F$ |

$C_F$

## FIG.2

0 082 652

# FIG.3

# FIG.4

# FIG.5

# FIG.6

## FIG.7

## FIG.8

# FIG.9